# EUROPEAN PATENT APPLICATION

(11) **EP 4 529 758 A1**
(43) Date of publication of application: **02.04.2025**
(21) Application number: 24203037.7
(22) Date of filing: 26.09.2024
(51) Int. Cl.: A01D 41/127, A01D 45/02, G06T 7/62, G06V 20/68

(54) **SYSTEM AND METHOD FOR DETECTING CROP LOSSES VIA IMAGING PROCESSING**

(30) Priority: 29.09.2023 US 202363541515 P
(71) Applicant: CNH Industrial America LLC, New Holland, PA 17557 (US)
(72) Inventor: Martin, Jethro, New Holland, 17557 (US); Hunt, Cory Douglas, New Holland, 17557 (US)
(74) Representative: CNH Industrial IP Department

(57) **Abstract**

A detection and control system for an agricultural harvester includes a controller with at least one memory and at least one processor. The controller is configured to receive a sensor signal indicative of an image of harvested crop material within a feederhouse of the agricultural harvester; analyze the image to detect at least one shelled ear of corn of the harvested crop material within the feederhouse; analyze the image to identify one or more parameters of the at least one shelled ear of corn; and determine an appropriate adjustment to one or more components of row units based on the one or more parameters of the at least one shelled ear of corn.

## Description

### BACKGROUND

This section is intended to introduce the reader to various aspects of art that may be related to various aspects of the present disclosure, which are described below. This discussion is believed to be helpful in providing the reader with background information to facilitate a better understanding of the various aspects of the present disclosure. Accordingly, it should be understood that these statements are to be read in this light, and not as admissions of prior art.

A harvester may be used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header may be designed to efficiently harvest corn. In particular, the corn header may include row units that include components that operate to separate ears of corn from stalks as the harvester travels through a field. Conveyors (e.g., augers) carry the ears of corn toward processing machinery and/or storage compartments of the harvester, while the stalks are deposited back into the field.

### SUMMARY

Certain embodiments commensurate in scope with the originally claimed subject matter are summarized below. These embodiments are not intended to limit the scope of the claimed subject matter, but rather these embodiments are intended only to provide a brief summary of possible forms of the disclosure. Indeed, the disclosure may encompass a variety of forms that may be similar to or different from the embodiments set forth below.

In certain embodiments, a detection and control system for an agricultural harvester includes a controller with at least one memory and at least one processor. The controller is configured to receive a sensor signal indicative of an image of harvested crop material within a feederhouse of the agricultural harvester; analyze the image to detect at least one shelled ear of corn of the harvested crop material within the feederhouse; analyze the image to identify one or more parameters of the at least one shelled ear of corn; and determine an appropriate adjustment to one or more components of row units based on the one or more parameters of the at least one shelled ear of corn.

In certain embodiments, a method for operating a detection and control system for an agricultural harvester includes receiving, at a controller, a sensor signal indicative of an image of harvested crop material within a feederhouse of the agricultural harvester; analyzing, using the controller, the image to detect at least one shelled ear of corn of the harvested crop material within the feederhouse; analyzing, using the controller, the image to identify one or more parameters of the at least one shelled ear of corn; and determining, using the controller, an appropriate adjustment to one or more components of row units based on the one or more parameters of the at least one shelled ear of corn

In certain embodiments, an agricultural harvester includes a header with a plurality of row units distributed across a width of the header and a controller comprising at least one memory and at least one processor. The controller is configured to receive a sensor signal indicative of an image of harvested crop material; and determine, via machine learning, an undesirable level of kernel loss in the harvested crop material due to one or more parameters of one or more components of the plurality of row units based on the image.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an agricultural harvester, in accordance aspects of the present disclosure;
FIG. 2 is a perspective view of a header that may be employed in the agricultural harvester of FIG. 1, in accordance with aspects of the present disclosure;
FIG. 3 is a schematic top view of a portion of the header of FIG. 2, in accordance with aspects of the present disclosure;
FIG. 4 is a perspective view of a row unit of the header of FIG. 2, in accordance with aspects of the present disclosure;
FIG. 5 is a schematic diagram of a harvested crop material in contact with deck plates of the header of FIG. 2, in accordance with aspects of the present disclosure;
FIG. 6 is an example of an image of a harvested crop material within a feederhouse of the header of FIG. 2, in accordance with aspects of the present disclosure; and
FIG. 7 is a flowchart of a method for detecting and responding to shelled harvested crop material, in accordance with aspects of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

The process of farming typically begins with planting seeds within a field. Over time, the seeds grow and eventually become harvestable crops. Typically, only a portion of each crop is commercially valuable, so each crop is harvested to separate usable material from a remainder of the crop. For example, a harvester may include or be coupled to a header to harvest crops within the field. The header may be a corn header that is configured to efficiently harvest corn within the field. The corn header may include multiple row units arranged across a width of the corn header, and each row unit may include deck plates, stalk rollers, and/or other component(s) that operate to separate ears of corn from stalks and materials other than grain (e.g., MOG; crop residue) as the harvester travels through the field. For example, the corn header may be capable of chopping the stalks quickly and collecting the ears of corn while leaving behind the stalks and any other unwanted and biodegradable byproduct (the materials other than grain). Conveyors (e.g., augers) carry the ears of corn into the harvester (e.g., a chassis of the harvester), such as toward processing machinery of the harvester.

The row units of the corn header include stalk rollers that engage the stalks and drive the stalks downwardly and rearwardly. As a stalk is driven downwardly, an ear of corn engages deck plates positioned above the stalk rollers, thereby separating the ear of corn from the stalk. The ear of corn moves rearwardly to the conveyors, and the stalk is deposited on the field. With embodiments disclosed herein, an operator may actively adjust the stalk rollers, a gap between the deck plates, and other features of the corn header to effectively and efficiently harvest the ears of corn as crop conditions change as the harvester traverses the field. This process may be demanding on the operator and subject to error.

It is presently recognized that as the ears of corn impact the corn header or components thereof (e.g., deck plate), particles (e.g., individual kernels) from the ears of corn may be removed from the ears of corn (e.g., from a corncob; as a result of the impact with the corn header) such that the particles are lost before being directed toward the processing machinery and/or storage compartments of the harvester, thereby reducing the yield from a harvesting operation. As discussed herein, "butt-shelling" may refer to a process of individual kernels of the ears of corn being separated from the ears of corn via engagement of the ears of corn with one or more components of the header (e.g., deck plates, stalk rollers). Accordingly, it may be desirable to employ one or more sensors (e.g., imaging sensors) to detect bare portions of the ears of corn at a location (e.g., at a feederhouse of the corn header) that is upstream from the processing machinery and/or the storage compartments of the harvester, such that adjustments may be made to one or more operating parameters of the corn header to reduce an amount of product lost due to impact with components of the corn header (e.g., reduce an amount of butt-shelling, reduce a rate of butt-shelling), thereby increasing the yield in the harvesting operation.

Accordingly, present embodiments relate to an imaging system that includes at least one imaging sensor (e.g., camera). The at least one imaging sensor may be located at the feederhouse of the corn header, and the at least one imaging sensor may be configured to generate images (e.g., imagery) of the ears of corn as the ears of corn travel through the feederhouse of the corn header. The imaging system may be configured to analyze the images to detect or identify bare portions of the ears of corn (e.g., due to missing kernels) as the ears of corn travel through the feederhouse of the corn header. For example, the imaging system may be configured to analyze the images to determine (e.g., estimate) respective surface areas of the bare portions of the ears of corn, a number of bare portions, a number of missing kernels, or any combination thereof. Additionally or alternatively, the imaging system may be configured to analyze the images to determine (e.g., classify) respective locations of the bare portions of the ears of corn (e.g., an end portion or a center portion).

As an example, a high number (e.g., count over time or percentage; over a threshold) of the ears of corn passing through the feederhouse of the corn header with bare portions at end portions of the ears of corn indicates excessive product loss due to impact at the row units (e.g., the deck plates of the row units). Accordingly, in such cases, it may be desirable to increase the gaps between the deck plates of the row units and/or make other changes to the row units to reduce or to block the product loss at the row units. However, a low number (e.g., count over time or percentage; under the threshold) of the ears of corn passing through the feederhouse of the corn header with bare portions at end portions of the ears of corn indicates lack of or acceptable product loss due to impact at the row units (e.g., the deck plates of the row units). In such cases, it may be desirable to maintain the gaps between the deck plates of the row units and/or other settings of the row units to continue to manage or to avoid product loss at the row units.

In certain embodiments, the imaging system may implement machine learning (e.g., artificial intelligence; computer vision) to analyze the images and to determine an amount of product loss due to the impact at the row units based on the images. As used herein, machine learning refers to algorithms and statistical models that may be used to perform a specific task without using explicit instructions, relying instead on patterns and inference. In particular, machine learning generates a mathematical model based on data (e.g., sample or training data, which may include historical data) in order to make predictions or decisions without being explicitly programmed to perform the specific task. Thus, as harvesting operations are performed, patterns of kernel loss may be updated and better reflect whether the product loss is excessive or acceptable, as well as whether it is appropriate or will be beneficial (e.g., to reduce kernel loss) to adjust components at the row unit and/or at some other location of the corn header. Thus, the imaging system may refer to and analyze the patterns of kernel loss (e.g., a current pattern of kernel loss for a current harvesting operation may be analyzed via machine learning) to accurately determine a condition of the corn header (e.g., the amount of product loss; excessive versus acceptable product loss; due to the row units), as well as appropriate responses (e.g., control signals to adjust the components of the corn header; a notification on a user interface for visualization by an operator).

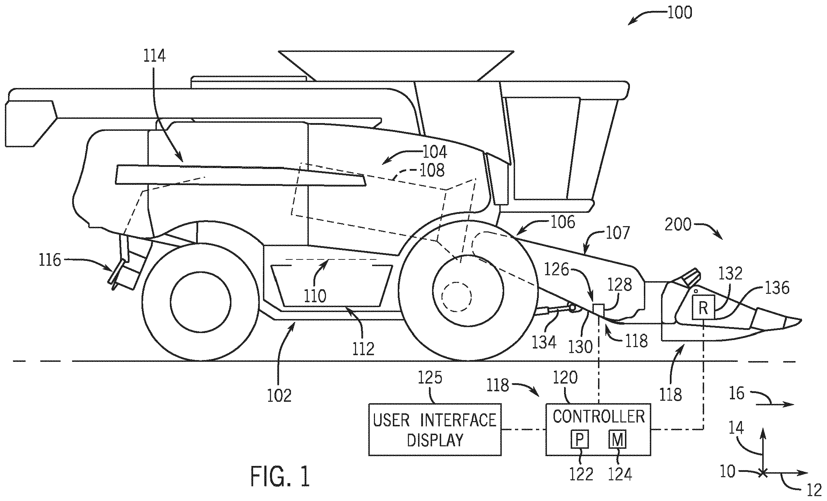

With the foregoing in mind, FIG. 1 is a side view of an embodiment of an agricultural harvester 100 having a corn header 200 (e.g., agricultural header). The agricultural harvester 100 includes a chassis 102 configured to support the corn header 200 and an agricultural crop processing system 104. The corn header 200 is configured to separate ears of corn from stalks (e.g., multiple row units separate ears of corn from stalks, thereby leaving bare stalks engaged with soil). The corn header 200 is configured to transport the ears of corn toward an inlet 106 (via a feederhouse 107) of the agricultural crop processing system 104 for further processing of the ears of corn. The agricultural crop processing system 104 receives the ears of corn from the corn header 200 (via the feederhouse 107) and separates desired crop material from crop residue. For example, the agricultural crop processing system 104 may include a thresher 108 having a cylindrical threshing rotor that transports the ears of corn in a helical flow path through the agricultural harvester 100. In addition to transporting the ears of corn, the thresher 108 may separate certain desired crop material (e.g., corn kernels) from the crop residue, such as husks and cobs, and enable the desired crop material to flow into a cleaning system 110 located beneath the thresher 108. The cleaning system 110 may remove debris from the desired crop material and transport the desired crop material to a storage compartment 112 within the agricultural harvester 100. The crop residue may be transported from the thresher 108 to a crop residue handling system 114, which may remove the crop residue from the agricultural harvester 100 via a crop residue spreading system 116 positioned at the aft end of the agricultural harvester 100. To facilitate discussion, the agricultural harvester 100 and/or its components (e.g., the corn header 200) may be described with reference to a lateral axis or direction 10, a longitudinal axis or direction 12, and a vertical axis or direction 14. The agricultural harvester 100 and/or its components (e.g., the corn header 200) may also be described with reference to a direction of travel 16.

The agricultural harvester 100 includes a row unit detection and control system 118. The row unit detection and control system 118 includes a control system or controller 120 (e.g., an automation controller, an electronic controller, a programmable controller, a cloud computing system, control circuitry) with a processor 122 (e.g., processing circuitry) and memory 124. The processor 122 may be used to execute software code or instructions stored on the memory 124, such as to process signals and to control operations of the agricultural harvester 100 and/or the corn header 200. The term "code" or "software code" used herein refers to any instructions or set of instructions that control the operation of the row unit detection and control system 118. The code or software code may exist in a computer-executable form, such as machine code, which is the set of instructions and data directly executed by the processor 122 of the controller 120, human-understandable form, such as source code, which may be compiled in order to be executed by the processor 122 of the controller 120, or an intermediate form, such as object code, which is produced by a compiler. In some embodiments, the row unit detection and control system 118 may include a plurality of controllers.

As an example, the memory 124 may store processor-executable software code or instructions (e.g., firmware or software), which are tangibly stored on a non-transitory computer readable medium. Additionally or alternatively, the memory 124 may store data. As an example, the memory 124 may include a volatile memory, such as random access memory (RAM), and/or a nonvolatile memory, such as read-only memory (ROM), flash memory, a hard drive, or any other suitable optical, magnetic, or solid-state storage medium, or a combination thereof. Furthermore, the processor 122 may include multiple microprocessors, one or more "general-purpose" microprocessors, one or more special-purpose microprocessors, and/or one or more application specific integrated circuits (ASICS), or some combination thereof. For example, the processor 122 may include one or more reduced instruction set (RISC) or complex instruction set (CISC) processors. The processor 122 may include multiple processors, and/or the memory 124 may include multiple memory devices. The processor 122 and/or the memory 124 may be located in any suitable portion of the agricultural harvester 100 (e.g., a cab of the agricultural harvester 100). Further, the controller 120 may be a distributed controller with the multiple processors 122 and/or the multiple memories 124 in separate housings or locations (e.g., in the corn header 200, in a remote location, in the cloud). The controller 120 may be communicatively coupled to a user interface or display 125. In certain embodiments, the user interface or display 125 may be located in a cab of the agricultural harvester 100.

The row unit detection and control system 118 includes an internal imaging system 126 communicatively coupled to the controller 120. The internal imaging system 126 includes one or more cameras 128, which may be located on a floor 130 of the feederhouse 107. The one or more cameras 128 acquire images (e.g., imagery) of the harvested crop material within the feederhouse 107 (prior to threshing) and communicate signals representative of the acquired images to the controller 120. These images within the feederhouse 107 may be acquired as the agricultural harvester 100 travels through a field of crops.

The controller 120 is configured to receive the signals representative of acquired images from the internal imaging system 126. The controller 120 is also configured to analyze the images by identifying a particular component of the harvested crop material (e.g., ear of corn) and measuring at least one metric (e.g., bare portions of the ear of corn, such as a surface area and/or a location of each of the bare portions) of the harvested crop material within the feederhouse 107. In certain embodiments, the controller 120 is further configured to analyze the images to identify trends over time (e.g., multiple ears of corn over time; a number of shelled ears of corn or ears of corn with bare portions within a period of time). In certain embodiments, the controller 120 is configured to utilize machine learning (e.g., artificial intelligence; computer vision) in analyzing the images and measuring the metrics within the images.

The controller 120 is further configured to determine an initial size of a gap between plates of rows units of the corn header 200 based on an initial setting. In certain embodiments, the controller 120 is even further configured to cause a user-perceptible indication of the initial size of the gap to be provided to an operator (e.g., on user interface or display 125) of the agricultural harvester 100 to enable the operator to be aware of the initial gap and/or to adjust the initial gap. In certain embodiments, the controller 120 is further configured to determine other parameters of the corn header 200, such as an angle of the row units of the corn header 200 relative to the agricultural harvester 100 and/or a rotational rate of feed rollers of the row units of the corn header, for example.

In certain embodiments, the controller 120 is configured to cause a user-perceptible indication of the presence of the at least one shelled ear of corn to be provided to the operator (e.g., on user interface or display 125) of the agricultural harvester 100 when the presence of the at least one shelled ear of corn is detected. In certain embodiments, the controller 120 is also configured to cause a recommendation to be provided to the operator (e.g., on user interface or display 125) to adjust the gap between the deck plates of the row units and/or adjust other parameters (e.g., the angle of the row units and/or the rotational rate of the stalk rollers) when the presence of the at least one shelled ear of corn is detected. In certain embodiments, the controller 120 is further configured to automatically adjust a size of the gap between the deck plates of the row units and/or adjust other parameters of the corn header 200 (e.g., the angle of the row units and/or the rotational rate of the stalk rollers) when the presence of the at least one shelled ear of corn is detected. The controller 120 is configured to receive and analyze the images and provide user-perceptible indications (e.g., of an initial size of the gap and/or presence of at least one shelled ear of corn) and/or to automatically adjust the gap between the deck plates of the row units and/or adjust other parameters of the corn header 200 (e.g., the angle of the row units and/or the rotational rate of the stalk rollers) as the agricultural harvester 100 travels through a field of crops so that the row units may be changed to account for variability in crop conditions and to limit product loss.

The row unit detection and control system 118 includes actuators 132 coupled to the deck plates and configured to alter a position (e.g., move the deck plates of each row unit toward and away from one another), thus, altering the gap between the deck plates of the row units. The row unit detection and control system 118 may also include actuators 134 that operate to adjust the angle of the corn header 200 relative to the agricultural harvester 100. The row unit detect and control system 118 may also include actuators 136 that operate to adjust the rotational rate of the stalk rollers of the row units. The controller 120 is communicatively coupled to the actuators 132, 134, 136 and may provide control signals to the actuators 132, 134, 136 to adjust respective parameters of the corn header 200.

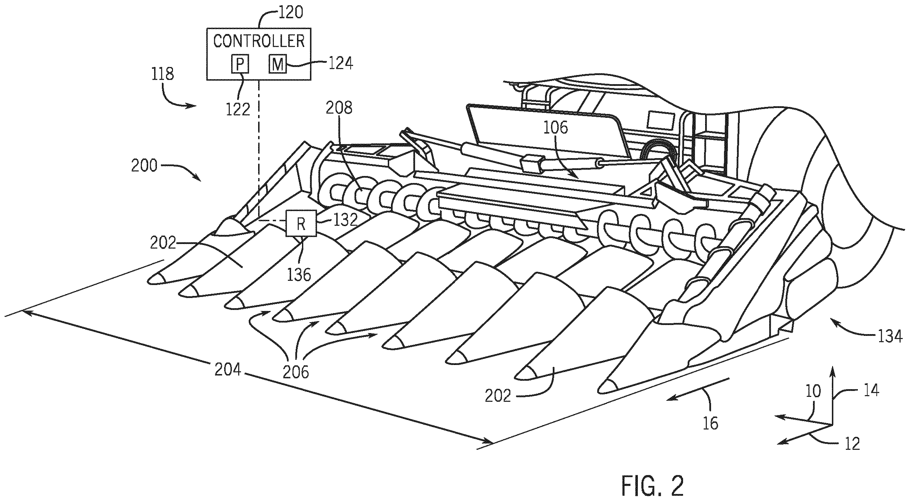

FIG. 2 is a perspective view of an embodiment of the corn header 200 that may be employed within the agricultural harvester 100 of FIG. 1. In the illustrated embodiment, the corn header 200 includes multiple dividers 202 configured to separate rows of a crop (e.g., corn). The dividers 202 may be distributed across a width 204 of the corn header 200 (e.g., along the lateral axis 10). As the corn header 200 moves along a path, the dividers 202 may direct the crops from each row to row units 206. The row units 206 are configured to receive each crop (e.g., a stalk). A portion of the crops are directed to one of a pair of conveyors 208 (e.g., augers) configured to convey the portion of crops laterally inward to a center crop conveyor at a center of the corn header 200, and the center crop conveyor directs the portion of crops toward the inlet 106 of the agricultural crop processing system. As illustrated, the conveyors 208 extend along a substantial portion of the width 204 of the corn header 200 (e.g., along the lateral axis 10). The conveyors 208 may be driven by a drive mechanism (e.g., electric motor, hydraulic motor).

The corn header 200 may separate the desirable crop material and crop residue from one another to facilitate directing the desirable crop material into the agricultural crop processing system via the inlet 106 and to block entry of the crop residue into the agricultural crop processing system via the inlet 106. For example, operation of the row units 206 may direct the desirable crop material to the conveyors 208 and discharge the crop residue away from the conveyors 208, such as discharging the crop residue directly onto the field. The controller 120 of the row unit detection and control system 118 may provide control signals to the actuators 132, 134, 136 to adjust the positioning of the components of the row units 206 as the agricultural harvester 100 cuts the crops, separates the crop residue from the desirable crop material, and discharges the crop residue (e.g., onto the field). In particular, the control signals to the actuators 132 may control the gap between the deck plates of the row units 206, the control signals to the actuators 134 may control the angle of the corn header 200 relative to the agricultural harvester 100, and the control signals to the actuators 136 may control the rotational rate of the stalk rollers of the row units 206.

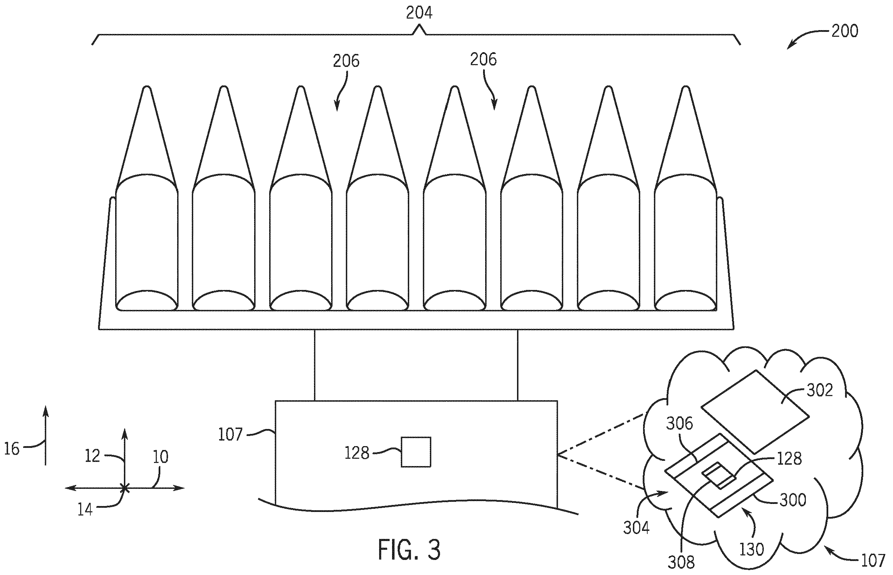

FIG. 3 is a top schematic view of an embodiment of the corn header 200 having one or more cameras 128, which may be located on the floor 130 of the feederhouse 107 of the corn header 200. The one or more cameras 128 may generate images of the ears of corn as the ears of corn travel from the row units 206 distributed across the width of the corn header 200 to the inlet of the agricultural harvester. In particular, the one or more cameras 128 may generate images of the ears of corn as the ears of corn travel through the feederhouse 107 located between the row units 206 and the agricultural harvester. As described herein, the images may be indicative of an amount of butt-shelling.

As shown, the feederhouse 107 may include a lower feederhouse plate 300 (e.g., a first feederhouse plate) and an upper feederhouse plate 302 (e.g., a second feeder house plate) that define a passageway 304. To facilitate discussion of the feederhouse 107, the lower feederhouse plate 300 and the upper feederhouse plate 302 are shown separate from one another, but it should be appreciated that the lower feederhouse plate 300 and the upper feederhouse plate 30 may be stacked on top of one another along the vertical axis 14 to form the passageway 304. In operation, drive members 306 (e.g., chains; conveyors; rollers) may drive or guide the ears of corn through the passageway 304.

The one or more cameras 128 may be mounted along the passageway 304 to capture the images of the ears of corn as the ears of corn move through the passageway 304. For example, the one or more cameras 128 may be mounted to the lower feederhouse plate 300 (e.g., via one or more fasteners, such as threaded fasteners, welds, and/or adhesives). In certain embodiments, the one or more cameras 128 may be mounted underneath the lower feederhouse plate 300 (e.g., in a housing that is mounted underneath the lower feederhouse plate 300) relative to the vertical axis 14, such that the one or more cameras 128 obtain the images through a portion 308 (e.g., window; at least partially transparent) defined in the lower feederhouse plate 300.

In certain embodiments, the one or more cameras 128 may include one camera 128 (e.g., a single camera; only one camera) at the feederhouse 107. In such cases, the images may not capture all of the ears of corn that move through the passageway 304 of the feederhouse 107; however, the images may be representative of a condition of all of the ears of corn being collected by the corn header 200. Accordingly, the images from the one camera 128 may enable a determination or estimation of the amount of butt-shelling and/or enable dynamic adjustments to address butt-shelling during harvesting operations.

While embodiments herein include one camera 128 along the feederhouse 107, it should be appreciated that any suitable number of cameras 128 (e.g., 1, 2, 3, 4, 5, 6, or more) may be provided along the feederhouse 107 and/or at other locations of the corn header 200 to facilitate techniques disclosed herein. For example, multiple cameras 128 may be distributed (e.g., spaced apart) along the lateral axis 10 and/or the longitudinal axis 12 to capture multiple images of the ears of corn as the ears of corn move through the passageway 304 of the feederhouse 107. The multiple images may be analyzed together to obtain additional data (e.g., as compared to the images from one camera 128) regarding a condition of the ears of corn (e.g., the amount of butt-shelling).

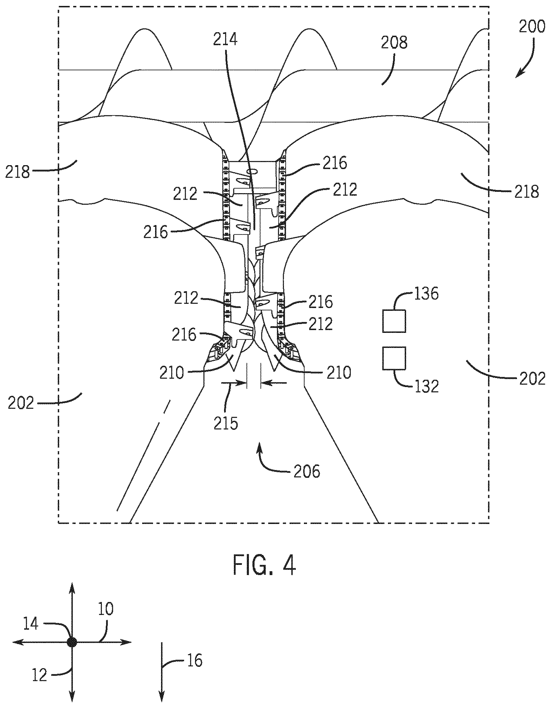

FIG. 4 is a perspective view of an embodiment of a portion of the corn header 200. As shown, each row unit 206 is positioned between adjacent dividers 202, and each row unit 206 includes various components that operate to separate a portion of the crop (e.g., ear of corn; desirable crop material) from the stalk, carry the portion of the crop (e.g., ear of corn; desirable crop material) toward the conveyors 208, and return the stalk to the field. For example, each row unit 206 may include a pair of stalk rollers 210 that are configured to grip the stalks and rotate in opposite directions to push the stalks in a direction toward the field (e.g., vertically downward direction along the vertical axis 14; below the corn header 200). The stalk rollers 210 may be configured to operate (e.g., rotate) at a particular speed to direct the stalks towards the field. In some embodiments, the speed at which the stalk rollers 210 rotate may be adjusted (e.g., via the actuator 136) based on the images captured by the one or more cameras, as described in herein.

Each row unit 206 also includes a pair of deck plates 212 that are positioned over (e.g., above) the pair of stalk rollers 210 relative to the vertical axis 14. Each deck plate 212 extends from a first end to a second end along the longitudinal axis 12, and the pair of deck plates 212 are separated from one another along the lateral axis 10 to define a gap 214. Further, each row unit 206 may include a pair of chains 216 (e.g., with lugs) that are configured to drive or push the portion of the crop (e.g., ear of corn; desirable crop material) along the pair of deck plates 212 toward the conveyor(s) 208. The pair of deck plates 212 are spaced apart so that a width 215 of the gap 214 is sized to enable the stalks to be pulled through the gap 214, but to block the portion of the crop (e.g., ears of corn; desirable crop material) from falling through the gap 214. In some embodiments, the pair of deck plates 212 are adjustable and may be driven (e.g., via the actuator 132) toward and away from one another along the lateral axis 10 to change the width 215 of the gap 214, as described in herein. A hood 218 is positioned rearward of each divider 202 relative to the direction of travel 16 and between adjacent row units 206 to cover various components, such as the actuators 132, 136, linkages, and so forth.

For good harvesting performance, the ears of corn should make initial contact with the pair deck plates 212 toward a forward portion of the pair of deck plates 212 relative to the longitudinal axis 12 or the forward direction of travel 16 of the corn header 200. This may enable the ears of corn to separate from its stalk such that the stalks can be completely discharged from the corn header 200 before reaching a rear portion of the pair of deck plates 212, thereby reducing a likelihood of the stalks being fed into the conveyors 208. Additionally, the width 215 of the gap 214 should be sized such that the stalks of the crop may pass through the gap 214, while the ears of corn is prevented or blocked from passing through the gap 214. For example, if the width 215 of the gap 214 is too large, both the stalk and the ear of corn may pass through the gap 214 and may be discharged from the corn header 200 before being directed to the conveyor 208, thereby resulting in product loss. In other cases, the width 215 of the gap 214 may be sized such that butt-shelling occurs. For example, as noted herein, butt-shelling may refer to individual kernels or particles of a crop being dislodged from the crop as the crop strikes or engages with the pair of deck plates 212. The butt-shelling may be a result of, and/or may be affected by, a velocity at which the crop strikes the pair of deck plates 212. However, in some cases, butt-shelling may occur when the width 215 of the gap 214 is sized such that only a portion of the ear of corn may pass through the gap 214 without interference, while different portions of the ear of corn engage with the pair of deck plates 212. Thus, a variety of operational and/or structural factors, such as a ground speed of the corn header 200, a rotational rate of the pair of stalk rollers 210, and/or an angle of the corn header 200 relative to the agricultural harvester (and thus relative to the ground), and/or the width 215 of the gap 214 between the pair of deck plates 212 (e.g., relative to a size of the ear of corn), may cause butt-shelling and/or affect a rate of butt-shelling.

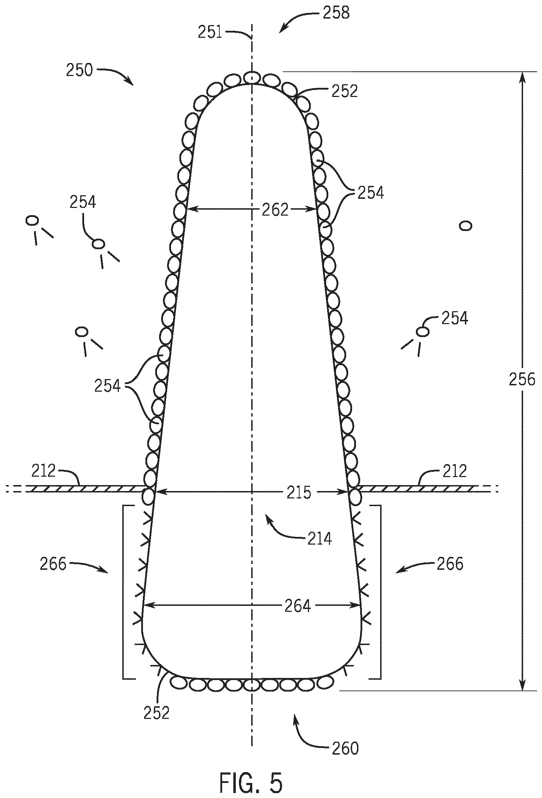

For example, FIG. 5 shows an example of a portion of a crop 250 (e.g., corn cob, ear of corn, desirable crop material) having a core 252 and a plurality of kernels 254 extending radially outward from the core 252 relative to a central axis 251 of the portion of the crop 250. The portion of the crop 250 may not be uniform in shape and thus may have a plurality of different diameters along a length 256 of the portion of the crop 250. For example, in some embodiments, the portion of the crop 250 may have a conical shape. Generally, the diameter of the portion of the crop 250 may progressively increase from an apex 258 of the portion of the crop 250 to a base 260 of the portion of the crop 250. For example, the portion of the crop 250 may have a first diameter 262 at or near the apex 258 of the portion of the crop 250 and a second diameter 264 at or near the base 260 of the portion of the crop 250. As illustrated, the second diameter 264 is greater than the first diameter 262. Further, the first diameter 262 may be less than the width 215 of the gap 214, such that the core 252 and the kernels 254 of the portion of the crop 250 near the apex 258 are able to pass through the gap 214, while the second diameter 264 of the portion of the crop 250 near the base 260 may be greater than the width 215 of the gap 214 such that the core 252 may pass through the gap 214, while the kernels 254 are limited or blocked from passing through the gap 214 by the pair of deck plates 212 (e.g., engage with the deck plates 212). As the stalk rollers 210 direct the stalk and the crop 250 towards the pair of deck plates 212, the portion of the crop 250 may strike one or both of the deck plates 212 and one or more kernels 254 may be dislodged (e.g., sheared) from the core 252 due to engagement of the kernels 254 with one and/or both of the deck plates 212, thereby resulting in one or more bare sections 266 on the portion of the crop 250, which may be undesirable. Indeed, as kernels 254 are dislodged from the portion of the crop 250, the kernels 254 may fall to the ground and/or otherwise be directed so as to escape (e.g., not be caught) by the corn header 200, thereby resulting in yield loss.

With reference to FIGS. 3 and 4, the width 215 of the gap 214 may be adjusted such that the stalk may pass through the gap 214, the portion of the crop may be blocked from passing through the gap 214, and an amount of butt-shelling may be limited (e.g., controlled, reduced), as described herein. Another factor for good harvesting performance is the speed at which the pair of stalk rollers 210 direct the stalk and the portion of the crop towards the pair of deck plates 212. For example, if the speed of the pair of stalk rollers 210 is too high (e.g., too fast), the impact force from the portion of the crop striking the pair of deck plates 212 as the stalk is directed through the gap 214 may be sufficient to cause kernels to dislodge from the portion of the crop (e.g., butt-shelling). However, if the speed of the pair of stalk rollers 210 is too low (e.g., too slow), reduced efficiency associated with harvesting a field may occur, thereby resulting in increased costs (e.g., more gas, more time for operators to harvest a field) associated with harvesting (e.g., fuel costs increase as equipment is running for longer amount of time, an amount of time that a farmer spends on a harvester may be increased, thereby resulting in less time to perform other harvesting operations). Accordingly, it may be desirable to operate the pair of stalk rollers 210 at a target speed (e.g., speed or speed range) that limits an amount of butt-shelling, while still enabling an operator to efficiently perform a harvesting operation.

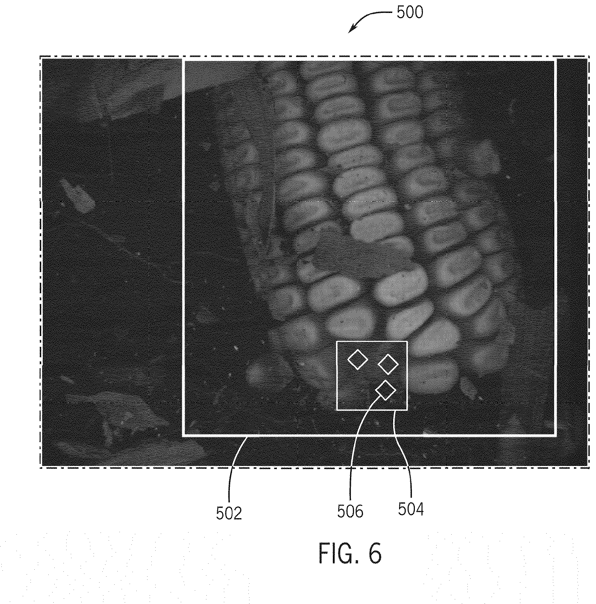

FIG. 6 is an example of an image 500 of harvested crop material within the feederhouse. As described herein, the image 500 may be captured by the one or more cameras within the feederhouse as the harvested crop materials passes through the feederhouse. As depicted, identification of an ear of corn is indicated by box 502. Also, as depicted, one or more parameters or characteristics of the ear of corn may be determined based on the image 500. For example, the one or more parameters may include a bare section 504 (e.g., shelled section) of the ear of corn, missing kernels 506 of the ear of corn, or any combination thereof. Further, the one or more parameters may include a location of the bare section 504 (e.g., at or proximate to an apex of the ear of corn).

It should be appreciated that the image 500 and/or any of a variety of markers, including the box 502, one or more section markers that identify (e.g., highlight, outline, mark) the bare section 504, and/or one or more kernel markers that identify (e.g., highlight, outline, mark) the missing kernels 506, may be presented to the operator, such as via the user interface display. In some cases, the image 500 and additional images may be presented as a video feed, such that the operator is able to view multiple ears of corn as the multiple ears of corn travel by the one or more cameras. In some such cases, the video feed may include some of all of the markers overlaid onto the ears of corn. Alternatively, the video feed may not include any of the markers or only a subset of the markers (e.g., only the one or more section markers); however, the operator may provide inputs to stop the video feed and to present a still image (e.g., the image 500) with some of or all of the markers or additional markers (e.g., the one or more section markers and the one or more kernel markers). Further, the operator may be able to provide inputs to scroll through multiple still images with some of all of the markers or the additional markers. This may enable the operator to visualize a quality or a condition of the ears of corn, as well as to understand why certain operational changes are being recommended and/or implemented by the agricultural system.

With reference to FIGS. 1-6, the row unit detection and control system 118 may include the one or more cameras 128 to obtain the images (e.g., such as the image 500) during the harvesting operations. The controller 120 may be configured to receive the images from the one or more cameras 128 and to analyze the images to assess a condition of the ears of corns passing through the feederhouse 107 of the corn header 200. The controller 120 may implement machine learning (e.g., artificial intelligence; computer vision) to identify the one or more parameters of the ears of corn based on the images, as well as to make determinations related to an amount of butt-shelling based on the images and/or appropriate responses to address undesirable levels of butt-shelling. For example, the controller 120 may determine an undesirable level of butt-shelling based on the images and also that that the undesirable level of butt-shelling is due to components of the row units 206. Then, the controller 120 may determine and implement appropriate adjustments (e.g., via the actuators 132, 134, 136) to the components of the row units 206 to block or to reduce the butt-shelling.

For example, in response to determining that the images indicate an undesirable level of butt-shelling (e.g., excessive kernel loss on the ears of corns), the controller 120 may send control signals to reduce the rotation rate of the pair of stalk rollers 210 and/or adjust the width 215 of the gap 214 to block or to reduce butt-shelling. In some embodiments, the appropriate output may include providing a control signal to reduce a ground speed of the corn header 200. In some embodiments, the appropriate output may include a visual alarm (e.g., presented via the user interface 125; text message with an explanation and/or a recommended adjustment, such as to the width 215 of the gap 214 and/or adjustment to the rotation rate of the stalk rollers 210) and/or an audible alarm (e.g., presented via a speaker).

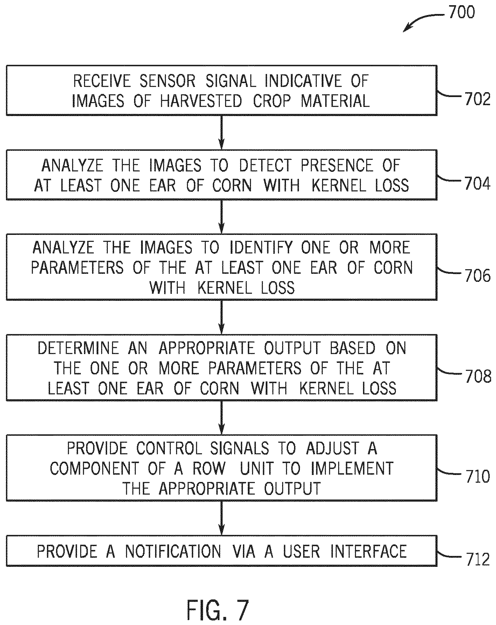

FIG. 7 is a flowchart of an embodiment of a method 700 for detecting and controlling components of the corn header 200 in FIG. 1. One or more steps of the method 700 may be may be performed by the controller 120 in FIG. 1. The steps of the method 700 may be repeated as the agricultural harvester 100 traverses a field of a crop (where crop conditions may vary). One or more steps of the method 700 may be performed simultaneously or in a different order from that depicted in FIG. 7.

The method 700 includes receiving a sensor signal indicative of an image of harvested crop material (prior to threshing) within a feederhouse of the agricultural harvester (block 702). The image is an internal image from within the feederhouse provided by one or more cameras, which may be located at or along a floor of the feederhouse (e.g., to capture the image through a window in the floor of the feederhouse).

The method 700 also includes analyzing the image to detect presence of at least one shelled ear of corn (block 704). As described herein, the controller may analyze the image via machine learning (e.g., artificial intelligence; computer vision) to detect the presence of the at least one shelled ear of corn, such as based on detection of patterns in the image. The method 700 also includes analyzing the images to identify one or more parameters of the at least one shelled ear of corn (block 706). As described herein, the controller may analyze the image via machine learning to identify the one or more parameters, which may include a surface area of a bare section, a number of missing kernels, a location of the bare section, or any combination thereof.

The method 700 also includes determining an appropriate output based on the images, such as based on the one or more parameters of the at least one shelled ear of corn (block 708). For example, the controller may utilize machine learning to determine that the one or more parameters of the at least one shelled ear of corn are indicative of excessive product loss due to one or more factors and/or excessive product loss that may be addressed (e.g., reduced or blocked) via adjustment one or more factors, such as a gap between deck plates, an angle of the corn header relative to the agricultural harvester, a rotational rate of stalk rollers, or any combination thereof.

The method 700 also includes providing control signals to adjust one or more components of a row unit, such as control signals to actuators to adjust a gap between deck plates, actuators to adjust an angle of the corn header relative to the agricultural harvester, actuators to adjust a rotational rate of stalk rollers, or any combination thereof (block 710). As described herein, the controller may also adjust a ground speed of the agricultural harvester, adjust an auger gap of the conveyor, and/or make other adjustments based on or to implement the appropriate output.

The method 700 also includes providing a notification via a user interface (block 712). For example, the notification may include a user-perceptible indication of the image (e.g., video feed and/or still images) to an operator (e.g., on the user interface or display 125 in FIG. 1) of the agricultural harvester. The user-perceptible indication of the image may be provided in real-time (e.g., within milliseconds or seconds to allow for processing and communication) as the agricultural harvester travels through the field. In certain embodiments, the notification may include recommended adjustments to the one or more components of the row unit for approval and/or input by the operator (e.g., upon input of the approval, the controller sends the control signals to the actuators). In certain embodiments, the notification includes current settings, commanded settings, or any combination thereof for the one or more components of the row units (e.g., the gap between the deck plates) to enable the operator to understand the automated adjustments being carried out to address (e.g., limit) the product loss due to butt-shelling.

By incorporating the systems and methods disclosed herein with agricultural harvesters, the process of harvesting crop material (e.g., corn) is more efficient. For example, detecting and controlling components of the row unit based on image processing of images of the crop material within the feederhouse enables desirable placement of the components of the row unit as crop conditions change throughout a field.

While only certain features have been illustrated and described herein, many modifications and changes will occur to those skilled in the art. It is, therefore, to be understood that the appended claims are intended to cover all such modifications.

## Claims

1. A detection and control system (118) for an agricultural harvester (100), **characterized in that** the detection and control system (118) comprises:
a controller (120) comprising at least one memory (124) and at least one processor (122), wherein the controller (120) is configured to:
receive a sensor signal indicative of an image (500) of harvested crop material within a feederhouse (107) of the agricultural harvester (100);
analyze the image (500) to detect at least one ear of corn with kernel loss;
analyze the image (500) to identify one or more parameters of the at least one ear of corn with kernel loss; and
determine an appropriate adjustment to one or more components of row units (206) based on the one or more parameters of the at least one ear of corn with kernel loss.

2. The detection and control system (118) of claim 1, wherein the controller (120) is configured to cause display of the image (500) to an operator of the agricultural harvester (100).

3. The detection and control system (118) of any of claims 1 to 2, wherein the image (500) comprises a video feed, a still image, or both.

4. The detection and control system (118) of any of claims 1 to 3, wherein the controller (120) is configured to provide control signals to one or more actuators (132, 134, 136) to automatically implement the appropriate adjustment to the one or more components of the row units (206).

5. The detection and control system (118) of claim 4, wherein the controller (120) is configured to provide the control signals to one or more actuators (132, 134, 136) to adjust respective gaps (214) between respective deck plates (212) of the row units (206) to automatically implement the appropriate adjustment to the one or more components of the row units (206).

6. The detection and control system (118) of any of claims 4 to 5, wherein the controller (120) is configured to provide the control signals to one or more actuators (132, 134, 136) to adjust a rotational rate of respective stalk rollers (210) of the row units (206) to automatically implement the appropriate adjustment to the one or more components of the row units (206).

7. The detection and control system (118) of any of claims 4 to 6, wherein the controller (120) is configured to provide the control signals to one or more actuators (132, 134, 136) to adjust an angle of the row units (206) relative to the agricultural harvester (100) to automatically implement the appropriate adjustment to the one or more components of the row units (206).

8. The detection and control system (118) of any of claims 1 to 7, wherein the controller (120) is configured to provide control signals to adjust a ground speed of the agricultural harvester (100) based on the one or more parameters of the at least one ear of corn with kernel loss.

9. The detection and control system (118) of any of claims 1 to 8, wherein the controller (120) is configured to utilize machine learning to detect the at least one ear of corn with kernel loss, to identify the one or more parameters of the at least one ear of corn with kernel loss, or any combination thereof.

10. The detection and control system (118) of any of claims 1 to 9, wherein the controller (120) is configured to utilize machine learning to determine the appropriate adjustment to the one or more components of row units (206) based on the one or more parameters of the at least one ear of corn with kernel loss.

11. The detection and control system (118) of any of claims 1 to 10, comprising an internal imaging system (126) comprising at least one camera (128) configured to be located at or along the feederhouse (107) between the row units (206) and a processing system (104) of the agricultural harvester (100), wherein the at least one camera (128) is configured to provide the sensor signal indicative of the image (500).

12. The detection and control system (118) of claim 11, wherein the at least one camera (128) is mounted underneath a lower plate (300) that defines a passageway (304) for the harvested crop material to flow through the feederhouse (107).

13. A method for operating a detection and control system (118) for an agricultural harvester (100), **characterized in that** the method comprises:
receiving, at a controller (120), a sensor signal indicative of an image (500) of harvested crop material within a feederhouse (107) of the agricultural harvester (100);
analyzing, using the controller (120), the image (500) to detect at least one ear of corn of the harvested crop material within the feederhouse (107);
analyzing, using the controller (120), the image (500) to identify one or more parameters related to kernel loss of the at least one ear of corn; and
determining, using the controller (120), an appropriate adjustment to one or more components of row units (206) based on the one or more parameters related to kernel loss of the at least one ear of corn.

14. The method of claim 13, comprising causing, via the controller (120), display of the image (500) to an operator of the agricultural harvester (100).

15. The method of any of claims 13 to 14, comprising using, with the controller (120), machine learning to detect the at least one ear of corn of the harvested crop material within the feederhouse (107), to identify the one or more parameters related to kernel loss of the at least one ear of corn, to determine the appropriate adjustment to the one or more components of row units (206) based on the one or more parameters related to kernel loss of the at least one ear of corn, or any combination thereof.

16. An agricultural harvester comprising a detection and control system (118) according to any of claims 1 to 12.
